(19) Europäisches Patentamt
European Patent Office
Office européen des brevets

(11) **EP 4 578 720 A1**

(12) **EUROPEAN PATENT APPLICATION**

(43) Date of publication:
**02.07.2025 Bulletin 2025/27**

(21) Application number: **24223263.5**

(22) Date of filing: **24.12.2024**

(51) International Patent Classification (IPC):
**B60L 53/62** (2019.01)   **B60L 53/63** (2019.01)
**B60L 53/66** (2019.01)   **B60L 53/67** (2019.01)
**B60L 53/68** (2019.01)

(52) Cooperative Patent Classification (CPC):
**B60L 53/63; B60L 53/62; B60L 53/66; B60L 53/67; B60L 53/68**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 IN 202311089510**

(71) Applicant: **Honeywell International Inc.
Charlotte, NC 28202 (US)**

(72) Inventors:
• **KAMATH, Madhav
  Charlotte, 28202 (US)**
• **RANJAN, Prabhat
  Charlotte, 28202 (US)**
• **KARNATI, Ramanjaneyulu
  Charlotte, 28202 (US)**

(74) Representative: **Haseltine Lake Kempner LLP
Cheapside House
138 Cheapside
London EC2V 6BJ (GB)**

(54) **SYSTEMS AND METHODS FOR CURTAILING ENERGY DEMAND OF ONE OR MORE ELECTRIC VEHICLE CHARGING STATIONS OF A FACILITY**

(57)    Methods and systems for maintaining an electrical energy or power consumption or output of a charging station group on-site at a facility below a group threshold charging rate. Charging station groups may include one or more electric vehicle (EV) charging stations each with one or more EV charging ports having a corresponding maximum rated charging rate. Maintaining an electrical energy or power consumption or output below a group threshold charging rate may include assigning a threshold charging rate to each of the one or more EV charging ports, identifying a charging port status of each of the one or more charging ports, increasing or decreasing the threshold charging rate of one or more of the EV charging ports that are identified as having a charging port charging status to an increased or decreased charging rate, and controlling each of the one or more EV charging ports with an associated threshold charging rate.

FIG. 1

EP 4 578 720 A1

**Description**

TECHNICAL FIELD

This disclosure relates generally to facility management systems and more particularly to systems and methods for managing energy loads of a facility.

BACKGROUND

Power systems are used to provide necessary power to a wide variety of systems of a facility such as, but not limited to, light systems, security systems, HVAC systems, computing systems, electric vehicle (EV) charging stations, and other systems. In some cases, utilities charge tariffs and/or other charges for excessive energy consumption by a facility. Improved method and systems for curtailing energy demand of a facility to help reduce such utility tariffs and other charges would be desirable, including curtailing energy demand of one or more EV charging stations of the facility.

SUMMARY

This disclosure is directed at energy management systems and methods and more particularly to systems and methods for managing energy loads of a facility. In one example, a method of maintaining electrical energy consumption or power output of a charging station group on-site at a facility below a group threshold charging rate, with the charging station group having one or more electric vehicle (EV) charging stations each with one or more EV charging ports, and wherein each of the one or more EV charging ports has a corresponding maximum rated charging rate, the method includes assigning a threshold charging rate to each of the one or more EV charging ports of each of the one or more EV charging stations of the charging station group, wherein the threshold charging rate of each of the one or more EV charging ports is less than or equal to the maximum rated charging rate of the corresponding EV charging port, and a sum of the threshold charging rates the one or more EV charging ports of the one or more EV charging stations of the charging station group is maintained at or below the group threshold charging rate, identifying a charging port status of each of the one or more EV charging ports of each of the one or more EV charging stations of the charging station group, the charging port status including a charging port available status and a charging port charging status, wherein the charging port available status indicates that the corresponding EV charging port is available to charge an electric vehicle and the charging port charging status indicates that the corresponding EV charging port is currently charging a corresponding electric vehicle, increasing the threshold charging rate of one or more of the EV charging ports that are identified as having a charging port charging status to an increased threshold charging rate that is at or less than the maximum rated charging rate of the corresponding EV charging port, and decreasing the threshold charging rate of one or more of the EV charging ports that are identified as having a charging port available status to a decreased threshold charging rate, while keeping the sum of the threshold charging rates of the one or more EV charging ports of the one or more EV charging stations of the charging station group to at or less than the group threshold charging rate, and controlling each of the one or more EV charging ports of the charging station group in accordance with the threshold charging rate of the corresponding EV charging port.

In another example, a load distribution system for managing loads at a charging station group of one or more electric vehicle (EV) charging stations of a facility below a group threshold charging rate may include one or more EV charging ports of the charging station group, the one or more EV charging ports each having a corresponding threshold charging rate and a controller in communication with the charging station group, the controller is configured to identify which EV charging port of the one or more EV charging ports are currently providing energy to a corresponding electric vehicle and which of the one or more EV charging ports are not currently providing energy to a corresponding electric vehicle, increasing the threshold charging rate of one or more EV charging ports that are identified as currently providing energy to a corresponding electric vehicle without exceeding a corresponding maximum rated charging rate for the corresponding EV charging port, and decreasing the threshold charging rate of one or more of the EV charging ports that are identified as not currently providing energy to a corresponding electric vehicle without falling below a predetermined minimum charging rate lower limit for the corresponding EV charging port, while keeping the sum of the threshold charging rates of the one or more EV charging ports of the one or more EV charging stations of the charging station group to at or less than the group threshold charging rate, and control each of the one or more EV charging ports of the charging station group in accordance with the threshold charging rate of the corresponding EV charging port.

In another example, a non-transitory computer readable medium storing instructions that when executed by one or more processors cause the one or more processors to identify which EV charging port of one or more EV charging ports of a charging station group are currently providing energy to a corresponding electric vehicle and which of the one or more EV charging ports are not currently providing energy to a corresponding electric vehicle, each of the one or more EV charging ports of the charging station group having a corresponding EV threshold charging rate and the charging station group having a group threshold charging rate, increase the threshold charging rate of one or more EV charging ports that are identified as currently providing energy to a corresponding electric vehicle without exceeding a corresponding maximum rated charging rate for the corresponding EV charging port, and decrease the threshold charging rate of one or more of the EV charging ports that are identified as not currently providing energy to a corresponding electric vehicle without falling below a predetermined minimum charging rate lower limit for the corresponding EV charging port, while keeping the sum of the threshold charging rates of the one or more EV charging ports of the charging station group to at or less than the group threshold charging rate, and control each of the one or more EV charging ports of the charging station group in accordance with the threshold charging rate of the corresponding EV charging port.

The preceding summary is provided to facilitate an understanding of some of the features of the present disclosure and is not intended to be a full description. A full appreciation of the disclosure can be gained by taking the entire specification, claims, drawings, and abstract as a whole.

BRIEF DESCRIPTION OF THE DRAWINGS

The disclosure may be more completely understood in consideration of the following detailed description of various embodiments in connection with the accompanying drawings, in which:

Figure 1 is a schematic diagram of an illustrative facility load management system and facility;
Figure 2 is a schematic diagram of an illustrative facility with one or more load management controllers;
Figure 3 is a schematic diagram of an illustrative computing device;
Figure 4 is a schematic diagram of an illustrative technique for controlling energy or power consumption;
Figure 5 show illustrative charging curves for electric vehicles;
Figure 6 is a schematic diagram of an illustrative technique for curtailing energy or power consumption;
Figure 7 is a schematic diagram of an illustrative technique for curtailing energy or power consumption;
Figure 8 is a schematic diagram of an illustrative technique for curtailing energy or power consumption;
Figures 9-12 are schematic diagrams of illustrative charts illustrating different energy or power consumption curtailment implementations; and
Figure 13 is a schematic diagram of an illustrative technique for curtailing energy or power consumption.

While the disclosure is amenable to various modifications and alternative forms, specifics thereof have been shown by way of example in the drawings and will be described in detail. It should be understood, however, that the intention is not to limit aspects of the disclosure to the particular embodiments described. On the contrary, the intention is to cover all modifications, equivalents, and alternatives falling within the spirit and scope of the disclosure.

DESCRIPTION

The following detailed description should be read with reference to the drawings in which similar elements in different drawings are numbered the same. The description and the drawings, which are not necessarily to scale, depict illustrative embodiments and are not intended to limit the scope of the disclosure. The illustrative embodiments depicted are intended only as exemplary. Selected features of any illustrative embodiment may be incorporated into an additional embodiment unless clearly stated to the contrary. Unless explicitly stated otherwise, configurations of the disclosed concepts related to energy may be similarly implemented using power as a unit and concepts related to power may be similarly implemented using energy as a unit.

With the wide adoption of electric vehicles (EVs) across the globe, the stability of existing power systems has been challenged due to power demands of the EVs. As such, it may be desirable to take load distribution actions on electric vehicle supply equipment (EVSE) to facilitate controlling demand on utility providers and/or demand on facilities that provide power to the electric vehicle supply equipment.

A facility (e.g., one or more buildings, commercial building, residential building, land, parking lots, and/or other suitable facilities) may include one or more EV charging stations, each with a plurality of EV charging ports. The EV charging stations may be provided as a convenience or benefit to the occupants of the facility. As the EV charging stations may be a new load or demand on a power structure of the facility, and in some cases the facility may not have been originally designed to include EV charging stations, facility managers may be concerned about increased expense for the energy provided to EVs and/or increased demand for power from the power systems of the facility and opt to utilize facility load management (e.g., demand load management (DLM)) of a building management system (BMS) to control energy provided to and/or how energy is distributed across the facility including to the EV charging ports.

Open Charge Point Protocol (OCPP) is a communication protocol that facilitates communication between an OCPP server (e.g., a HONEYWELL JACE controller and/or other suitable server may act as the OCPP server) and an charging stations of a facility, such that EV charging parameters may be obtained, via the OCPP server, from the EV charging station while the EV is being charged. Example EV charging parameters that may be obtained include, but are not limited to, energy output from the EV charging station, charging limits set for an EV charging connector, a state of charge (SOC) of the EV, and/or other suitable parameters. In some configurations, the parameters obtained from the EV charging stations via the OCPP and/or other protocols may be utilized to help control energy provided to EVs from EV charging ports and to achieve an acceptable load distribution at the one or more EV charging stations.

When configuring a load distribution strategy for one or more EV charging stations, one or more factors may be considered. Example suitable factors for consideration when developing a load distribution strategy include, but are not limited to, a connection of one or more EV charging stations relative to one or more circuit breakers of the facility and/or relative to other charging stations, available power form a circuit breaker (e.g., an electrical circuit breaker limit) through which power is provided to the one or more charging stations, ability to dynamically adjust energy delivered to EVs from the EV charging ports, total power available at the facility, whether an EV charging port is currently providing energy to an EV, a load threshold of a building or facility, tariffs and/or other fees associated with exceeding a load threshold of a building or facility, and/or other suitable factors.

One or more load distribution strategies may be utilized when considering power demands on a facility from EV charging stations. In one example, an EV static load distribution strategy may be utilized, where loads (from EV charging ports) at a group of one or more charging stations may be controlled such that the loads, in combination, do not exceed one or more static group thresholds if all EV charging ports at the group of one or more EV charging stations were to be active at a same time, while ensuring maximum availability of and delivery of energy to EVs. An example of a static group threshold charging rate might be a rated power threshold or electrical circuit breaker limit of an electrical circuit breaker through which power is provided to the group of one or more EV charging stations. In another example, an EV dynamic load distribution may be utilized, where loads at a group of one or more charging stations may be controlled such that the loads, in combination, do not exceed one or more dynamic group thresholds if all EV ports at the group of one or more charging stations were to be active at a same time, while ensuring maximum availability of and delivery of energy to EVs. An example of a dynamic group threshold might be a rated power threshold or electrical circuit breaker limit of a circuit breaker through which power is provided to the group of one or more EV charging stations, where the rated power threshold or electric circuit breaker limit may be adjusted to meet load management requirements of the facility.

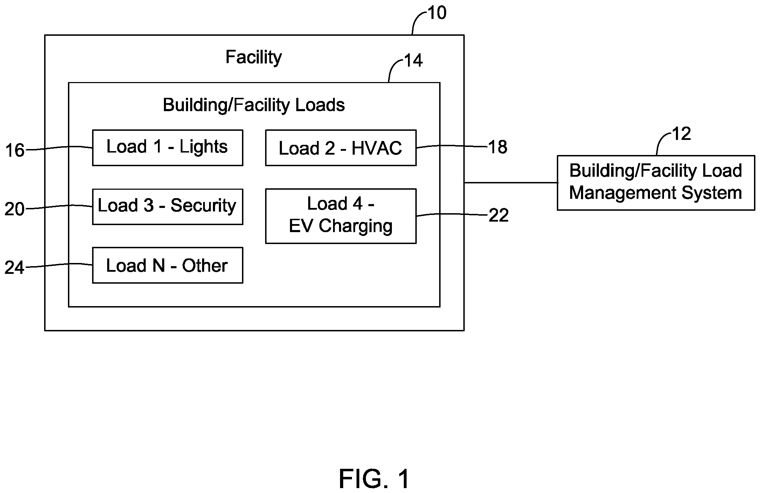

Turning to the Figures, Figure 1 depicts a facility 10 (e.g., one or more buildings, commercial building, residential building, land, parking lots, and/or other suitable facilities) and a facility load management system 12. The facility load management system 12 may be located at the facility 10 and/or remote from the facility 10 and may or may not be part of a building management system (BMS).

The facility load management system 12 may be in communication with electronic components of the facility 10 to control and/or manage a power load or power demand of the facility 10 on a utility provider. The facility load management system 12 may include and/or may be part of a local area network (LAN) at the facility 10 and/or part of a wide area network (WAN) that includes a LAN at the facility 10, a remote server, a utility provider, and/or other suitable component configured to communicate over a network.

The facility 10 may include one or more building/facility loads 14. A load 14 of the facility 10 may be any component or system drawing or configured to draw energy through a power system of the facility 10. Example loads 14 of the facility 10 may be a lighting or illumination system 16, an HVAC system 18, a security system 20, an EV charging load 22, and/or other suitable loads 24. The facility load management system 12 may be configured to adjust one or more of the loads 14 at the facility 10 to meet the needs of a power structure at the facility 10, to meet the needs of a power structure of a power utility, to reduce costs to the facility 10, and/or for one or more other suitable purposes. In some examples, the facility load management system 12 may be configured to adjust energy provided to an EV from an EV charging station to adjust the EV charging load 22 on the facility 10 and thus reduce an overall load of the facility 10 on the power utility (e.g., to meet a threshold load value for the facility 10 and avoid potential fees or tariffs) and/or to meet a power equipment threshold of electrical equipment (e.g., a configured power of one or more electrical components such as electrical circuit breakers) through which power is provided to the one or more charging stations of the group of one or more charging stations.

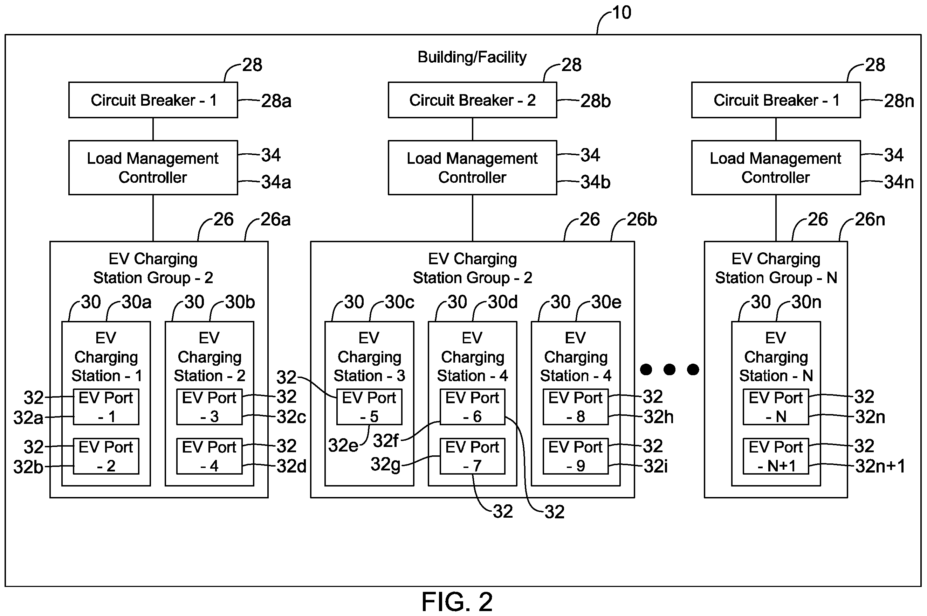

Figure 2 schematically depicts an illustrative diagram of a facility 10 having one or more of EV charging station groups 26. Each EV charging station group 26 may be associated with one or more electrical circuit breakers 28 having a maximum power rating or electrical circuit breaker limit and/or other electrical components having a maximum power rating that may limit an amount of power available to an EV charging station group 26. In some examples, the maximum power rating of the electrical components may be adjustable (e.g. reduced) by the facility load management system 12, but this is not required. As depicted in Figure 2, the facility 10 may include a first EV charging station group 26a associated with a first electrical circuit breaker 28a, a second EV charging station group 26b associated with a second electrical circuit breaker 28b, and an Nth EV charging station group 26n associated with an Nth electrical circuit breaker, where the Nth or nth of a component may represent that any suitable number of that component may be utilized.

The EV charging station groups 26 may include a group of one or more EV charging stations 30, where each EV charging station 30 may include one or more EV charging ports 32. The EV charging stations 30 may be grouped into the EV charging station groups 26 in any suitable manner including, but not limited to, based on locations of the EV charging stations 30 (e.g., where the first EV charging station group 26a including a first EV charging station 30a and a second EV charging station 30b may be associated with a first parking lot of the facility 10, etc.), based on a type of energy provided to the EV (e.g., where EV charging stations 30 of one EV charging station group 26 may be associated with alternating current (AC) energy and EV charging stations 30 of another EV charging station group 26 may be associated with direct current (DC), etc.), based on a likely demand for EV charging ports 32 at the EV charging station 30, and/or based on one or more other suitable factors. In one example, the EV charging station groups 26 may include EV charging stations 30 that are located in a common parking lot, where the first EV charging station group 26a may include a first EV charging station 30a having first and second EV charging ports 32a, 32b and a second EV charging station 30b having third and fourth EV charging ports 32c, 32d, the second EV charging station group 26b may include a third EV charging station 30c having a fifth EV charging port 32e, a fifth EV charging station 30e having a sixth and a seventh EV charging ports 32f, 32g, and a fifth EV charging station 30e having an eighth and ninth EV charging ports 32h, 32i, and the Nth EV charging station group 26n may include an nth EV charging station 30n with nth and nth+1 EV charging ports 32n, 32n+1. Other suitable configurations are contemplated.

When the facility load management system 12 (e.g., the BMS or at least a portion of the BMS) is at least partially on-site at the facility 10, the facility load management system 12 may include one or more load management subsystems or controllers 34 (e.g., a group load management subsystem or controller and/or other suitable load management subsystem or controller) associated with the one or more EV charging stations 30, one or more EV charging station groups 26, one or more circuit breakers 28, and/or one or more other electrical components of the facility 10. The one or more load management controllers 34 may include computer hardware and/or software and may be located or at least in communication with one or more of the circuit breakers 28, the EV charging stations 30, and/or the EV charging ports 32 associated with an EV charging station group 26. In some examples, the one or more load management controllers 34, the one or more EV charging ports 32, and/or other suitable components may form a load distribution system for managing and/or controlling EV charging loads at the EV charging station group 26 to maintain the EV charging station loads below a group threshold charging rate (e.g., which may be an electrical circuit breaker limit, a total power available to the EV charging station group 26, a total curtailed power available to the EV charging station group 26, etc.)

As depicted in Figure 2, a first load management controller 34a may be associated with the first EV charging station group 26a and the first electrical circuit breaker 28a, a second load management controller 34b may be associated with the second EV charging station group 26b and the second electrical circuit breaker 28b, and an Nth load management controller 34n may be associated with the Nth EV charging station group 26n and the Nth electrical circuit breaker 28n. Although separate load management controllers 34 are depicted as being associated with the different EV charging station groups 26 and/or electrical circuit breakers 28, a single load management controller 34 may manage loads of two or more EV charging station groups 26.

The EV charging ports 32 may be any suitable type of EV charging port. For example, the EV charging ports 32 may be configured to provide AC energy to an EV, DC energy to an EV, or AC energy and DC energy to an EV. In some configurations each EV charging port 32 may have a charging rate, which may be equal to or less than a maximum charging rate (e.g., a rated power or a maximum rated charging rate) at which the EV charging port 32 may be able to provide energy to an EV. In one example, the maximum rated charging rate may be a predetermined value based on a hardware configuration of the EV charging port 32 and/or may be set by a user via a user interface in communication with the EV charging port 32.

Each EV charging station group 26 may have an associated group threshold charging rate. The group threshold charging rate may be an amount of power that may be available to the EV charging stations 30 of the EV charging station group 26. In some examples, the group threshold charging rate may be a maximum amount of energy that may be provided through the electrical circuit breaker 28 with out tripping the electrical circuit breaker 28 (e.g., an electrical circuit breaker limit), however, the group threshold charging rate may be associated with a rated power of one or more other suitable electrical components at the facility 10 and/or may be set based on the curtailment needs of the facility load management system 12 and/or other suitable factors.

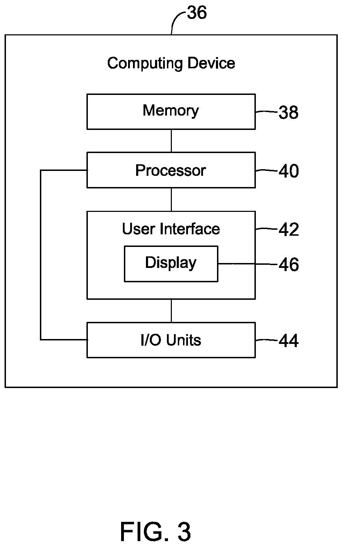

The facility 10, the facility load management system 12, the facility loads 14, the electrical circuit breakers 28, the EV charging stations 30, the EV charging ports 32, the load management controller 34, and/or other suitable components of the facility 10 may be, may include, and/or may be controlled by a computing device, software, or a computing device and software. An example computing device 36 is depicted in Figure 3. In some examples, the load management controller 34 may be a virtual software point implemented via the computing device 36.

The computing device 36 may be part of or represent all or part of the load distribution system including at least one load management controller 34 and at least one EV charging port 32. In some cases, the computing device 36 may include memory 38, one or more processors 40, one or more user interfaces 42, one or more input/output (I/O) units 44, and/or one or more other suitable computing components. The computing device 36 may be implemented in a server, a desktop computer, a laptop computer, a controller or any other suitable device. In some cases, the computing device 36 is a distributed computing device that is distributed across different geographic locations.

The memory 38 may be any type of storage medium that can be accessed by the processor 40 to perform various examples of the present disclosure. For example, the memory 38 may be a non-transitory computer readable medium having computer readable instructions (e.g., computer or application program instructions, application program code of a mobile application or software, control algorithm software, and/or other suitable instructions) stored thereon that are executable by the one or more processors 40 for performing one or more methods described herein.

The memory 38 may be volatile or nonvolatile memory. The memory 38 may also be removable (e.g., portable) memory, or non-removable (e.g., internal) memory. For example, the memory 38 may be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although the memory 38 is illustrated as being located in the computing device 36, embodiments of the present disclosure are not so limited. For example, the memory 38 may be located internal to another computing resource (e.g., enabling computer readable instructions to be downloaded over the Internet or another wired or wireless connection).

The one or more processors 40 of the computing device 36 may include a single processor or more than one processor working individually or with one another. The one or more processors 40 may be configured to execute instructions, including instructions that may be loaded into the memory 38 and/or other suitable memory. Example processor components may include, but are not limited to, microprocessors, microcontrollers, multicore processors, central processing units, graphical processing units, digital signal processors, application specific integrated circuits (ASICs), field programmable gate arrays (FPGAs), discrete circuitry, and/or other suitable types of data processing devices.

The user interface 42, when provided, may be any suitable user interface and/or user interface components configured to facilitate a user of the computing device 36 interacting with the computing device 36 via the user interface 42. For example, the user interface 42 may be used to provide information to and receive information from the user of the computing device 36. For instance, the user interface 42 may display one or more thresholds, total power available at the EV charging station group 26 (e.g., a group threshold charging rate), threshold charging rates for one or more EV charging port 32, which EV charging ports 32 are available for connection to an EV, a status of an EV charging port 32, and/or other suitable data related to control and/or operation of the EV charging station groups 26 for managing loads at the EV charging station group 26. The user interface 42 may include a keyboard or keyboard functionality, a pointer (e.g., a mouse, touch pad, or touch ball) or pointer functionality, a microphone, a speaker, a light system, a haptic system, a camera, a video camera, selectable buttons, adjustable dials, and/or other suitable user interface features the user may use to input information into and/or receive information from the computing device 36. Configurations of the present disclosure, however, are not limited to a particular type(s) of user interface 42.

In some cases, the user interface 42 may include a graphical user interface (GUI) that may have a display 46 (e.g., a screen) that may provide and/or receive information to and/or from the user of the computing device 36. The display 46 may be, for instance, a touch-screen (e.g., the GUI may include touch-screen capabilities). In some cases, the user interface 42 may be part of another device (e.g. cell phone) that is in wireless communication with the computing device 36.

The I/O unit 44 may be and/or may include any type of communication port(s) and may facilitate wired and/or wireless communication with one or more networks. In one example, the I/O unit 44 may facilitate communication with one or more networks and/or other devices through any suitable connection including, but not limited to, radio communication, Ethernet, cellular communication, ZigBee, REDLINK™, Bluetooth, Bluetooth Low Energy (BLE), WiFi, LORA, IrDA, dedicated short range communication (DSRC), EnOcean, Near Field Communication (NFC), and/or any other suitable common or proprietary wired or wireless protocol. The I/O unit 44 may include one or more ports configured to communicate over a local area network (LAN) and/or a wide area network (WAN). In one example, the I/O unit 44 may at least include a port configured to communicate over a LAN with one or more components of or in communication with the load management controller(s) 34. In another example, the I/O unit 44 may include one or more ports configured to facilitate communication over a LAN and a WAN with one or more components of or in communication with the load management controller(s) 34.

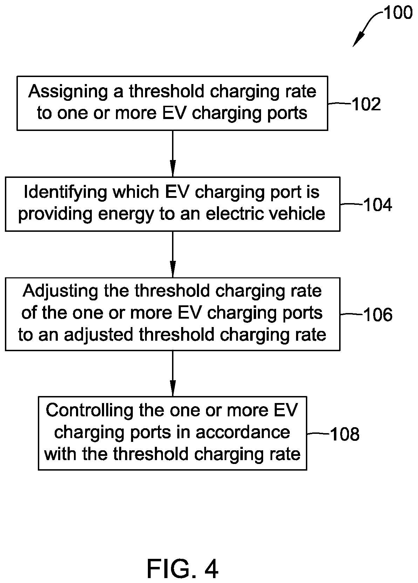

Figure 4 depicts an illustrative method 100 of maintaining electrical energy consumption of an EV charging station group 26 (e.g., an EV charging station group 26 on-site at the facility 10) below a group threshold charging rate associated with the EV charging station group 26. In some examples and as discussed, the EV charging station group 26 may include one or more EV charging stations 30 each with one or more EV charging ports 32 having a corresponding maximum rated charging rate.

The method 100 may include assigning 102 a threshold charging rate (e.g., an initial or default threshold charging rate) to one or more of the EV charging ports 32 of the EV charging station group 26. In some examples, the threshold charging rates may be assigned to each of the one or more EV charging ports 32 of each of the one or more EV charging stations 30 of the EV charging station group 26, but other suitable configurations are contemplated. The assigned threshold charging rate for an EV charging port 32 may be equal to or less than the maximum rated charging rate of the EV charging port. The threshold charging rates assigned to the EV charging ports 32 of the EV charging station group 26 may be configured such that a sum of all of the threshold charging rates of the EV charging ports 32 is equal to or less than the group threshold charging rate.

In one example of assigning threshold charging rates to EV charging ports 32 of the EV charging station group 26, the group threshold charging rate for the EV charging station group 26 may be 50 kilowatts (KW) and there may be three EV charging ports 32 associated with the EV charging station group 26. The group threshold charging rate and/or the number of EV charging ports 32 may be known in the system based on components of the system and/or may be inputted by a user. The 50 KW group threshold charging rate may be equally distributed to the EV charging ports 32 that are available for charging an EV, such that the threshold charging rate for each EV charging port 32 is initially set at 16.66 KW, which may be considered an initial or default threshold charging rate. The threshold charging rate is a controlled maximum rate of energy that may be provided from the EV charging port 32 to an EV. Other suitable configurations are contemplated.

In some examples, one or more of the EV charging ports 32 may be excluded (e.g., selected to be excluded via a user interface and/or excluded in one or more other suitable manners from being adjusted based on an EV charging port status of any of the other EV charging ports 32 of the EV charging station group 26) to maintain electrical energy consumption of an EV charging station group 26 below the group threshold charging rate. In the example above, where the group threshold charging rate is 50 KW and there are three EV charging ports 32, one of the three EV charging ports 32 may be selected as being excluded from adjustment to maintain the electrical consumption of the EV charging station group 26 below the group threshold charging rate (e.g., the selected EV charging port 32 may have a fixed threshold charging rate). When the EV charging port 32 selected to be excluded from adjustment of its threshold charging rate has a maximum rated charging rate of 20 KW, the threshold charging rate for the selected EV charging port 32 may be a fixed threshold charging rate and set at 20 KW, while the other two EV charging ports 32 are assigned a threshold charging rate of the group threshold charging rate less the fixed threshold charging rate, where the difference is divided by the number of EV charging ports 32 and results in the remaining EV charging ports 32 receiving a threshold charging rate of 15 KW. Other suitable configurations are contemplated.

The method 100 may include identifying 104 an EV charging port status of one or more EV charging ports 32 of the EV charging station group 26. The charging port status may provide any suitable indication concerning the status of the EV charging port 32. For example, the charging port status of an EV charging port 32 may have an EV charging port available status indicating that the EV charging port 32 may be available for charging an EV, an EV charging port charging status indicating the EV charging port 32 may be actively charging an EV, and/or other suitable indications. Although not depicted, the load management controller 34 and/or other suitable controller in communication with the EV charging ports 32 may be configured to sense and/or identify when energy is provided to an EV through an associated EV charging port 32. The charging port status of the EV charging ports 32 may be identified constantly in real time (e.g., dynamically identified) and/or at one or more other suitable periods or cycles. Example suitable periods at which the charging port status of the EV charging ports 32 may be identified may include, but are not limited to, one second, one minute, ten minutes, fifteen minutes, and/or other suitable time periods.

The method 100 may include adjusting 106 the threshold charging rate assigned to one or more (e.g., each of) the EV charging ports 32 of the EV charging station group 26 to an adjusted threshold charging rate based on and/or as the charging port status for one or more EV charging ports 32 changes over time. As the threshold charging rates of the EV charging ports 32 are adjusted, a sum of the threshold charging rates (whether adjusted or not) of the one or more EV charging ports 32 may be maintained at or less than the group threshold charging rate.

The threshold charging rates assigned to one or more of the EV charging ports 32 may be updated or adjusted constantly in real time (e.g., dynamically adjusted) and/or at one or more other suitable periods or cycles. Example suitable periods at which the threshold charging rates of the EV charging ports 32 may be updated or adjusted may include, but are not limited to, one second, one minute, ten minutes, fifteen minutes, and/or other suitable time periods.

In some examples, the threshold charging rate of one or more EV charging ports 32 may be adjusted by increasing the threshold charging rate and/or decreasing the threshold charging rate based on and/or as an EV charging port status of one or more EV charging ports 32 changes. For example, the threshold charging rate of one or more of the EV charging ports 32 that are identified as having an EV charging port charging status may be increased to an increased threshold charging rate and the threshold charging rate of one or more of the EV charging ports 32 that are identified as having an EV charging port available status may be decreased to a decreased threshold charging rate.

When increasing the threshold charging rate of an EV charging port 32, the threshold charging rate may be increased to a maximum threshold charging rate (e.g., an upper limit) equal to the maximum rated charging rate of the EV charging port 32 or a charging rate less than the maximum rated charging rate of the EV charging port 32. When decreasing the threshold charging rate of an EV charging port, the threshold charging rate may be decreased to zero or another suitable minimum threshold charging rate (e.g., a lower limit) to be used as the threshold charging rate when the threshold charging rate would otherwise be adjusted below the minimum threshold charging rate. The minimum threshold charging rate may be any suitable value including, but not limited to, a minimum charging rate value at which an EV will noticeably charge. In some configurations, the maximum charging rate and/or the minimum charging rate of an EV port may be predetermined based on the EV charging port configuration and/or may be adjustable and/or predetermined by a user via the user interface 42.

The method 100 may include controlling 108 each of the one or more EV charging ports 32 in accordance with the threshold charging rate associated with the corresponding EV charging port 32. In some examples, controlling the EV charging port 32 in accordance with an assigned or associated threshold charging rate may include controlling the EV charging port 32 to provide energy to an EV based on an initial or default threshold charging rate, a decrease threshold charging rate, an increase threshold charging rate, and/or other suitable threshold charging rate.

When the threshold charging rates of EV charging ports 32 of an EV charging station group 26 have been adjusted based on a change in the status of one or more of the charging ports (e.g., from charging port charging status to charging port available status or from charging port available status to charging port charging status), the EV charging ports 32 may immediately change (e.g., dynamically change) the threshold charging rate at which energy is provided to the EV and/or wait until a next cycle update to change the threshold charging rate at which the EV charging port 32 provides energy to the EV. A cycle for updating the threshold charging rates at which the EV charging port 32 provides energy to an EV may last for any suitable time period including, but not limited to, one second, one minute, ten minutes, fifteen minutes, and/or other suitable amount(s) of time.

In one example application of the method 100, a first EV charging station group 26 may be associated with a first electrical circuit breaker 28 having an electrical circuit breaker limit feeding 50 KW of energy (e.g., which may be set as a group threshold charging rate) to three EV charging ports 32 each having maximum rated charging rates of 20 KW that are associated with the first EV charging station group 26, and a second EV charging station group 26 may be associated with a second electrical circuit breaker 28 having an electrical circuit breaker limit feeding 80 KW to five EV charging ports 32 each having a maximum rated charging rate of 20 KW that are associated with the second EV charging station group 26. When all EV charging ports 32 in each of the first and second EV charging station groups 26 are indicated as having an EV charging port 32 available, each of the EV charging ports 32 of the first EV charging station group 26 may be assigned an initial or default threshold charging rate of 16.66 KW (e.g., 50 KW/three EV charging ports 32) and each of the EV charging ports 32 of the second EV charging station group 26 may be assigned an initial or default threshold charging rate of 16 KW (e.g., 80KW/five EV charging ports 32). The electrical circuit breaker limits (e.g., group threshold charging rates) and/or the threshold charging rates may be assigned and/or adjusted over time by the load management controller 34 of a BMS of a facility and/or other suitable controller.

When one EV charging port 32 of each of the first and second EV charging station groups 26 is identified as having an EV charging port charging status and all other EV charging ports 32 have an EV charging port available status, the EV charging ports 32 with the charging port charging status may begin charging an associated EV using respective initial or default threshold charging rates (e.g., 16.67 KW for the EV charging port 32 of the first EV charging station group 26 and 16 KW for the EV charging port 32 of the second EV charging station group 26) while the respective threshold charging rates for all of the EV charging ports 32 of the first and second EV charging station groups 26 may be adjusted. In the first EV charging station group 26, the EV charging port 32 with the charging port charging status may be adjusted to 20 KW (e.g., the maximum rated charging rate for the EV charging port 32) and the EV charging ports 32 with the charging port available status may be adjusted to 15 KW (e.g., (50 KW group threshold charging rate minus 20 KW)/two EV charging ports 32 with the charging port available status). In the second EV charging station group 26, the EV charging port 32 with the charging port charging status may be adjusted to 20 KW (e.g., the maximum rated charging rate for the EV charging port 32) and the EV charging ports 32 with the charging port available status may be adjusted to 15 KW (e.g., (80 KW group threshold charging rate minus 20 KW)/four EV charging ports 32 with charging port available status). Then, the EV charging ports 32 with the charging port charging status may provide energy to the EV at the updated or adjusted threshold charging rate immediately (e.g., in real time or dynamically) after updating or adjusting the threshold charging rate and/or after an update cycle.

When a second EV charging port 32 of each of the first and second EV charging station groups 26 is identified as having an EV charging port charging status and all remaining EV charging ports 32 have an EV charging port available status, the first EV charging ports 32 in the EV charging station groups 26 that have the charging port charging status may continue charging respective EVs at the adjusted threshold charging rates (e.g., 20 KW) and the second EV charging ports 32 with the charging port charging status in each EV charging station group 26 may begin charging an associated EV using the previously adjusted threshold charging rate (e.g., 15 KW for the second EV charging ports 32 of the first and second EV charging station group 26) while the respective threshold charging rates for all of the EV charging ports 32 of the first and second EV charging station groups 26 may be further adjusted. In the first EV charging station group 26, the two EV charging ports 32 with the charging port charging status may each be adjusted to 20 KW (e.g., the maximum rated charging rate for the EV charging ports 32) and the EV charging ports 32 with the charging port available status may be adjusted to 10 KW (e.g., (50 KW group threshold charging rate minus 20 KW minus 20 KW)/one EV charging port 32 with charging port available status). In the second EV charging station group 26, the two EV charging ports 32 with the charging port charging status may be adjusted to 20 KW (e.g., the maximum rated charging rate for the EV charging ports 32) and the EV charging ports 32 with the charging port available status may be adjusted to 13.33 KW (e.g., (80 KW group threshold charging rate minus 20 KW minus 20 KW)/ three EV charging ports 32 with charging port available status). Then, the EV charging ports 32 with the charging port charging status may provide energy to the EV at the further updated or adjusted threshold charging rate immediately (e.g., in real time or dynamically) after updating or adjusting the threshold charging rate and/or after an update cycle.

In some configurations, the EV charging ports 32 may have a minimum threshold charging rate. For example, the EV charging ports 32 may have a minimum threshold charging rate of 11 KW. When the minimum threshold charging rate for the EV charging ports 32 is 11 KW, the above further adjusted threshold charging rates for the EV charging ports 32 of the second EV charging station group 26 are still valid, but the further adjusted threshold charging rates of the EV charging ports 32 of the first EV charging station group 26 may need to be adjusted in view of the minimum threshold charging rate. For example, the adjusted threshold charging rates of EV charging ports 32 having the charging port available status may be set at 11 KW and the adjusted threshold charging rates of the two EV charging ports 32 having the charging port charging status may be set to 19.5 KW (e.g., (50 KW group threshold charging rate minus 11KW)/two EV charging ports 32 with charging port charging status).

When a third EV charging port 32 of each of the first and second EV charging station groups 26 is identified as having an EV charging port charging status and all other EV charging ports 32, if any, have an EV charging port available status, the first and second EV charging ports 32 in the EV charging station groups 26 that have the charging port charging status may continue charging respective EVs at the previously assigned further adjusted threshold charging rates (e.g., 19.5 KW for the first and second EV charging ports 32 of the first EV charging station group 26 and 20 KW for the first and second EV charging ports 32 of the second EV charging station group 26) and the third EV charging ports 32 with the charging port charging status in each EV charging station group 26 may begin charging an associated EV using the previously assigned further adjusted threshold charging rate (e.g., 11 KW for the third EV charging port 32 of the first EV charging station group 26 and 13.33 for the third EV charging port 32 of the second EV charging station group 26), while the respective threshold charging rates for all of the EV charging ports 32 of the first and second EV charging station groups 26 may be yet further adjusted. In the first EV charging station group 26, the three EV charging ports 32 with the charging port charging status may each be adjusted to 16.66 KW (e.g., 50 KW group threshold charging rate /three EV charging ports 32 with charging port charging status, as no EV charging ports 32 in the first EV charging station group 26 have an EV charging port available status). In the second EV charging station group 26, the threshold charging rates of the two EV charging ports 32 with an EV charging port available status may be set to the minimum threshold rate of 11 KW and the three EV charging ports 32 with the charging port charging status may be adjusted to 19.33 KW (e.g., 80 KW group threshold charging rate minus 11 KW minimum threshold charging rate - 11 KW minimum threshold charging rate)/three EV charging ports 32 with an EV charging port charging status). Then, the EV charging ports 32 with the charging port charging status may provide energy to the EVs at the yet further updated or adjusted threshold charging rates immediately (e.g., in real time or dynamically) after updating or adjusting the threshold charging rate and/or after an update cycle.

As discussed above, one or more of the EV charging ports 32 may have a fixed threshold charging rate (e.g., such an EV charging port 32 may be on an exclusion or opt-out list, where the threshold charging rate may be set to the maximum rated charging rate or other suitable charging rate). When an EV charging port 32 has a fixed threshold charging rate, the group threshold charging rate of (e.g., the total power available to or maximum allowed power at) the EV charging station group 26 may be reduced by the fixed threshold charging rate to a reduced group threshold charging rate and the above-discussed calculations and/or adjustments may be based on the reduced group threshold charging rate independent of an EV charging port status of the EV charging port 32 with the fixed threshold charging rate.

Although the above example discusses adjusting the threshold charging rate when an EV charging port status of an EV charging port 32 changes from charging port available status to charging port charging status, the threshold charging rate may be similarly adjusted when the charging port status of an EV charging port 32 changes from charging port charging status to charging port available status. Further, other example configurations for controlling energy consumption of one or more EV charging station groups 26 via a controller associated with the facility 10 at which the EV charging stations 30 of the EV charging station groups 26 are located are contemplated.

Further, the method 100 and/or other suitable methods may be utilized in a dynamic load management of the facility 10, as a whole. For example, when a facility is required to curtail energy consumption by ten percent or other suitable amount, the group threshold charging rate of (e.g., the total power provided to or maximum allowed power at) an EV charging station group 26 may be cut by 10 percent or other suitable amount. When the group threshold charging rate of an EV charging station group 26 is 50 KW and ten percent of the power in the facility 10 is to be cut or curtailed, a curtailed group threshold charging rate of the EV charging station group 26 may be set to 45 KW and the threshold charging rates may be adjusted accordingly based on the curtailed group threshold charging rate.

Dynamic load management of the facility 10 may be implemented at EV charging stations 30 and/or EV charging ports 32 in a variety of different ways. For example, when a load curtailment signal is received at one or more EV charging stations, an equal balancing technique, a prioritization technique, and/or other suitable methods or techniques may be utilized to determine which EV charging ports 32 receive a curtailment control signal to achieve an EV charging station curtailment amount (e.g., a load curtailment amount) in accordance with the load curtailment signal received. The curtailment control signal may be configured to provide a curtailment amount, curtailment duration, and/or other suitable parameters related to curtailing energy or power from an EV charging port 32 to a coupled EV.

When an equal balancing technique is utilized to distribute a load curtailment amount among EV charging ports 32 charging corresponding EVs, the curtailment amount may be distributed equally among one or more or all EV charging ports 32 identified as charging an EV. For example, when a load curtailment amount is received, the load management controller 34 and/or other suitable component of the facility load management system 12 may equally divide the curtailment amount among one or more or all of the EV charging ports 32 charging an EV. In one example, an EV charging station 30 may receive a load curtailment control signal from the load management controller 34 or other suitable controller indicating the load at the EV charging station 30 is to be reduced by 10% (e.g., an EV charging station curtailment amount, which may be a percentage, an energy value, and/or take on another suitable form) and the EV charging station may equally divide that 10% load reduction by reducing the load of each EV charging port 32 providing energy to a corresponding EV by 10% of the energy the EV charging port 32 is currently (e.g., at the time of receiving the control signal and until a time in the future) delivering to the corresponding EV. Other suitable configurations are contemplated.

When a prioritization technique is utilized to distribute a load curtailment amount among EV charging ports 32 charging an EV, it may be possible to achieves a desired reduction in load on the facility 10 by the EV charging stations 30 while allowing the EVs most in need of charging to charge. As such, the load management controller 34 and/or other suitable components of the facility load management system 12 may reduce loads of EV charging ports 32 to achieve a curtailment amount based on a prioritization that mitigates discomfort to users (e.g., to charge the EV vehicles most in need of charging).

In some examples, a state of charge (SOC) of an EV (e.g., a charge level of a battery or batteries of an EV) may be utilized as a parameter for prioritizing which EV charging ports 32 receive a curtailment control signal. As discussed, the EV charging ports 32 may be configured to provide AC energy, DC energy, or both. Although the SOC of an EV may be available to an EV charging station 30 over OCPP when the EV charging port 32 is coupled with an EV and configured to charge the EV with DC energy, the SOC of an EV may not be available when the EV charging port 32 is configured to the charge the EV with AC energy. As a result, one or more parameters that correlate with the SOC of an EV and that are obtainable over OCPP and/or other suitable protocols or based on parameters or data at the EV charging station 30 may be utilized to prioritize which EV charging ports 32 receive curtailment control signals.

Two example parameters that correlate with a SOC of an EV and are available from and/or may be determined based on data from the EV charging station 30 independent of whether the EV charging port 32 provides AC energy or DC energy, are 1) rate of decline in energy delivery rate to the EV, and 2) an EV charging port loading percentage. As a result, the rate of decline in energy delivery rate to an EV and an EV charging port loading percentage may be utilized in a prioritization technique to determine which EV charging ports 32 receive curtailment control signals.

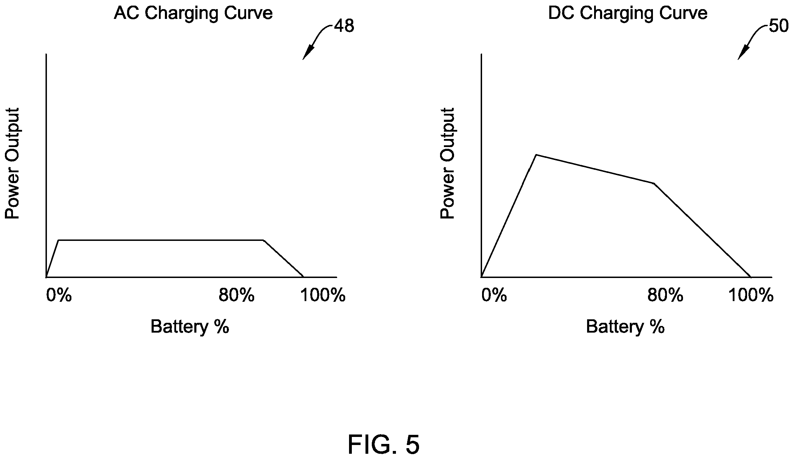

Figure 5 depicts a graph 48 of the charging of an EV via an EV charging port 32 with AC energy and a graph 50 of the charging of an EV via an EV charging port 32 with DC energy. The graphs 48, 50 depict a percent charge of an EV battery system (e.g., where the battery system includes one or more batteries) on an x-axis and a power output from the EV charging port 32 coupled with the EV on a y-axis. As seen in the graphs 48, 50, the power output from the EV charging ports 32 may vary with a percent charge of a battery of the EV and thus, correlates with a state of charge of the EV (e.g., a percent charge of battery the battery system).

The rate of decline of power output from the EV charging port 32 to the EV may be identified, calculated, or determined in any suitable manner for one or more of the EV charging ports 32. In some example, the rate of decline of power output may be calculated using the following algorithm:

$$D_{Rate} = (P_{i-t} - P_i)/t \qquad (1)$$

where $D_{Rate}$ is the rate of decline of energy or power output or delivery from the EV charging port 32 to an EV, $P_i$ is a current energy or power output or delivery from the EV charging port 32 to the EV, $P_{i-t}$ is an energy or power output or delivery from the EV charging port 32 at a previous time, where $t$ is a time between when the current energy or power output or delivery from the EV charging port 32 is determined, $i$, and the time when the previous energy or power output from the EV charging port 32 was determined. Alternatively or additionally, rates of decline of energy or power delivery or output may be determined for the EV charging station 30 as a whole in a similar manner to as how the rate of decline of energy or power output or delivery from the EV charging port 32 to an EV is determined.

The EV charging port loading percentage of an EV charging port 32 may be calculated or determined in any suitable manner. In some examples, the EV charging port loading percentage may be calculated using the following algorithm:

$$L_{Percent} = P_O/P_R \qquad (2)$$

where $L_{Percent}$ is the EV charging port loading percentage, Po is the energy or power output from an EV charging port 32 at a given time, and $P_R$ is a rated energy or power of the EV charging port 32.

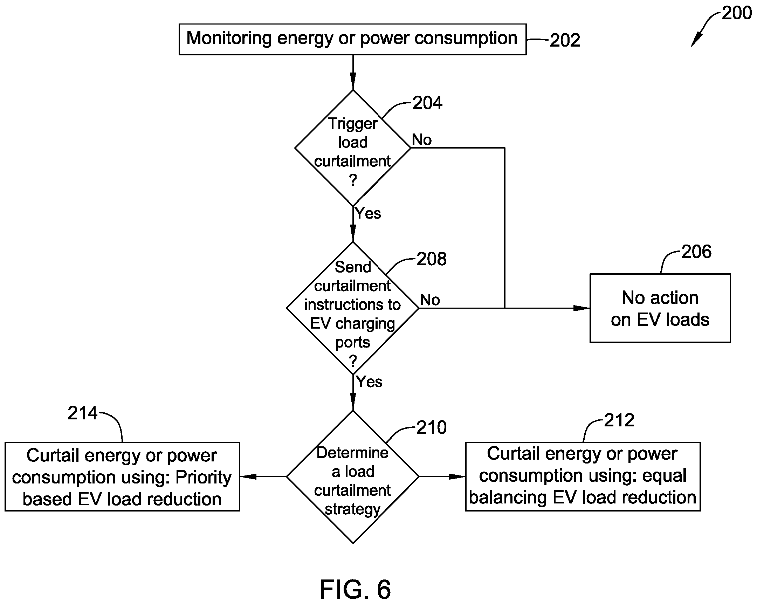

Figure 6 depicts a method 200 for curtailing an electrical load presented by one or more EV charging stations 30, where each charging station includes one or more EV charging ports 32. The facility load management system 12 and/or the load management controller(s) 34 may be utilized to implement curtailing an electrical load of the one or more charging stations 30.

The method 200 may include monitoring energy or power consumption or demand 202 of the facility 10, of the EV charging station(s) 30 (e.g., as energy or power output or delivery from the EV charging station(s) 30, etc.), of the EV charging port(s) 32 (e.g., as energy or power output or delivery from the EV charging port(s) 32, etc.), and/or other suitable electrical components of the facility 10. In some examples, monitoring energy consumption of the facility 10 may include identifying which, if any, EV charging ports 32 of the EV charging stations 30 are currently delivering energy to a corresponding EV. Monitoring energy or power consumption of the facility 10 may include monitoring energy consumption, power demand, and/or other suitable parameters at EV charging ports 32 identified as delivering energy to a corresponding EV.

The facility load management system 12, the load management controller(s) 34, and/or other suitable control system(s) may be utilized to monitor the energy or power consumption or demand at the facility 10 and determine 204 that a load curtailment should be triggered. A determination that a load curtailment should or should not be triggered may be based on one or more suitable factors. Example suitable factors include, but are not limited to, whether energy or power consumption or demand at the facility 10 has or is expected to have an energy or power consumption or demand that triggers one or more utility tariffs of a utility, a cost of energy per unit, energy consumption of other facilities, a time of day, current weather, a condition of a power grid, a predetermined energy or power consumption or demand threshold for the facility 10, and/or other suitable factors.

When it is determined not to trigger a load curtailment, no action 206 needs to be taken to reduce EV charging port loads. When no action needs to be taken, the energy or power consumption or demand of the facility may be monitored for when a load curtailment should be triggered.

When it is determined to trigger a load curtailment, a determination 208 as to whether to send a load curtailment control signal to the EV charging station(s) 30 and/or the EV charging ports 32 charging an EV may be made. In some examples, a curtailment instruction may not be sent to the EV charging station 30 and/or the EV charging ports 32 when other loads of the facility 10 may be reduced to meet a load curtailment amount of the triggered load curtailment, such that no action 206 is to be taken on the EV loads. For example, the facility load management system 12 may choose to reduce loads 14 of the facility 10 that may be less intrusive or may have a smaller effect on users or operations of the facility than reducing a load at the EV charging station(s) 30 and/or the EV charging port(s) 32.

Before, during, or when it is determined curtailment instructions are to be sent to all of the EV charging station(s) 30 and/or the EV charging port(s) 32 or at least the EV charging port(s) 32 that are identified as currently delivering energy or power to a corresponding EV, a load curtailment strategy may be determined 210 to reduce the load at the EV charging station(s) 30 by a curtailment amount of the facility 10 that is allocated to the EV charging station(s) 30. In some examples, energy or power consumption or demand of the EV charging station(s) 30 may be curtailed by curtailing one or more of the EV charging ports 32 charging an EV by a corresponding EV charging port curtailment amount and the load curtailment strategy selected may determine the EV charging port curtailment amount for each EV charging port 32 charging an EV. For example, when the curtailment consumption strategy of equal balancing EV load reduction 212 is selected, the EV charging port curtailment amount for each EV charging port 32 charging an EV may be the same (e.g. same percentage). When the curtailment strategy of priority based EV load reduction 214 is selected, the EV charging port curtailment amount for each EV charging port 32 charging an EV may be different for one or more EV charging ports 32 than at least one other EV charging port 32 based on a need or priority for an EV coupled to the EV charging port 32 to be charged. In some configurations, a need or priority for the EV coupled to the EV charging port 32 to be charged may be based on the SOC of the EV that is receiving energy or power from the EV charging port 32. Once a load curtailment strategy has been determined and it has been determined that load curtailment instructions are to be sent, control signals may be sent to the EV charging ports 32 to curtail energy or power delivered to a corresponding EV by the EV charging port 32 using the identified load curtailment strategy.

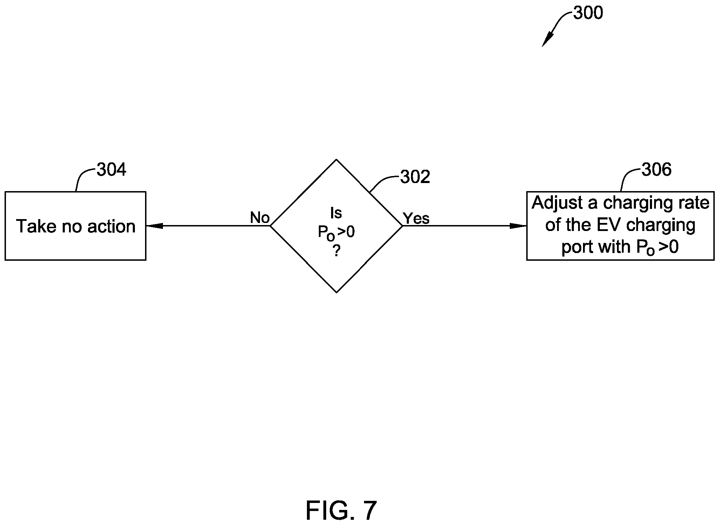

Figure 7 depicts a schematic diagram of an illustrative equal balancing EV load reduction technique 300. The equal balancing EV load reduction technique 300 may include determining 302 whether the power output, Po, (or energy output) from an EV charging port 32 is greater than zero (e.g., when the power output, Po, from an EV charging port 32 is greater than zero, the EV charging port 32 may be identified as currently delivering energy or power to a corresponding EV). When the power output, Po, is not greater than zero, no action 304 is taken with respect to that EV charging port 32. When the power output, Po, of an EV charging port 32 is greater than zero, the power output, Po, from the EV charging port 32 may be adjusted 306 to curtail energy or power consumption at the EV charging port 32. This technique and/or process may be repeated for each EV charging port 32 of the one or more EV charging stations 30 and the energy or power consumption or demand of all EV charging ports 32 with power output, Po, greater than zero may be reduced by a same EV charging port curtailment amount.

The EV charging port curtailment amount utilized in the equal balancing EV load reduction technique 300 may be determined in any suitable manner. In some examples, the EV charging port curtailment amount may be determined by dividing a load reduction value by the number of EV charging ports 32 with a power output, Po, greater than zero such that all EV charging port curtailment amounts are equal independent of the respective power output, Po. For example, if a facility is to reduce an electrical load by 100 KW and the EV charging stations are allocated to reduce twenty five percent of the 100 KW (e.g., a charging station curtailment amount is 25 KW), an EV charging port curtailment amount may be set at 25 KW divided by the number of EV charging ports 32 with a power output, Po, greater than zero. In some examples, the EV charging port curtailment amount may be determined by setting the EV charging port curtailment amount to a percentage of the power output, Po, of the EV charging port 32 such that each EV charging port 32 with a power output, Po, greater than zero may have a power output, Po, reduced by a different value, but same percentage. For example, when a curtailment amount for a facility is 10% of a total load on the facility 10, the EV charging station curtailment amount may be 10% and the power output, Po, of each EV charging port 32 with a power output, Po, greater than zero may be reduced by 10%. Other suitable configurations are contemplated.

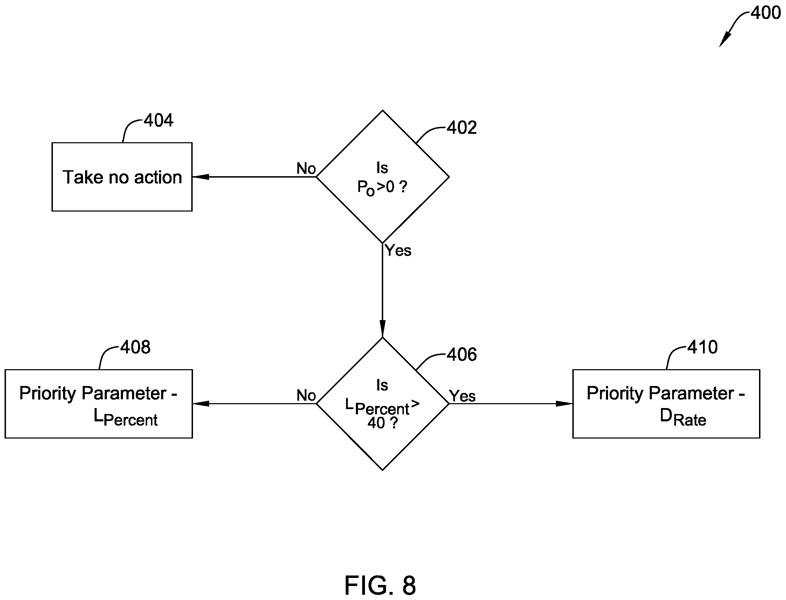

Figure 8 depicts a schematic diagram of an illustrative priority based EV load reduction technique 400. In some examples, the priority based EV load reduction technique 400 may be based on an SOC of the EVs that are receiving energy or power from corresponding EV charging ports 32. Other suitable configurations are contemplated.

The technique 400 may include determining 402 if power output, Po, (or energy output) from the EV charging port 32 providing energy or power to the EV is greater than zero. When the power output, Po, of an EV charging port 32 is not greater than zero, no action 404 is taken with respect to that EV charging port 32. When the power output, Po, of an EV charging port 32 is greater than zero, the power output, Po, from the EV charging port 32 may be curtailed depending on a priority of the EV charging port 32 based at least in part on the SOC of the EV (e.g., based on the SOC, the a rate of decline in energy or power delivery rate to the EV, an EV charging port loading percent, and/or other suitable value based on or correlating to the SOC of the EV).

In some configurations, a priority of the EV charging port 32 for a curtailment of energy or power outputted may be determined based on a rate of decline, $D_{Rate}$, and/or the EV charging port loading percent, $L_{Percent}$. For example, when the power output, Po, from the EV charging port 32 is greater than zero, the technique 400 may include determining 406 whether the EV charging port loading percent, $L_{Percent}$, is greater than a loading percent threshold value. The EV charging port loading percent, $L_{Percent}$, may be identified as discussed above with respect to equation (2) and/or in one or more other suitable manners. The loading percent threshold value may be any suitable value and may be associated with an expected SOC of the battery system of the EV at the threshold value. In one example, the loading percent threshold value may be set at 40%, which may correlate to a battery system that is approximately 80% charged, but other suitable values are contemplated.

When the EV charging port loading percent, $L_{Percent}$, is less than or equal to the threshold, the EV charging port loading percent, $L_{Percent}$, may be selected 408 as a primary parameter for determining a priority of the EV charging port 32 for receiving an energy or power curtailment amount and, generally, EV charging ports 32 with higher EV charging port loading percents, $L_{Percent}$, may have energy or power curtailed prior to and/or to a greater extent than EV charging ports 32 with lower EV charging port loading percents, $L_{Percent}$. When the EV charging port loading percent, $L_{Percent}$, is greater than the threshold, the rate of decline, $D_{Rate}$, (e.g., as determined using equation (1)) of energy or power output from the EV charging port 32 may be selected 410 as a primary parameter for determining a priority of the EV charging port 32 for receiving an energy or power curtailment amount and, generally, EV charging ports 32 with higher rates of decline, $D_{Rate}$, may have energy or power curtailed prior to and/or to a greater extent than EV charging ports 32 with lower rates of decline, $D_{Rate}$. When the loading percent, $L_{Percent}$, of one or more of the EV charging ports 32 is greater than the threshold, but those EV charging ports 32 do not have a rate of decline above a threshold, the loading percent, $L_{Percent}$, for the one or more EV charging ports 32 may be utilized to determine priority for receiving an EV charging port curtailment amount.

When allocating an EV charging station curtailment amount (e.g., a total curtailment amount) for each of one or more EV charging stations 30, all or a portion of the EV charging station curtailment amount may be allocated to an EV charging port 32 as the EV charging port curtailment amount in any suitable manner. Example factors for determining an EV charging station curtailment amount to be allocated to an EV charging port include, but are not limited to, a maximum load reduction per EV charging port 32, a minimum threshold charging rate, charging port loading percent, $L_{Percent}$, the rates of decline, $D_{Rate}$, of energy or power output from the EV charging port 32, an EV charging station curtail amount for each of the one or more EV charging stations 30, whether a rate of decline, $D_{Rate}$, of energy or power output from the EV charging port 32 is observed, and/or other suitable factors.

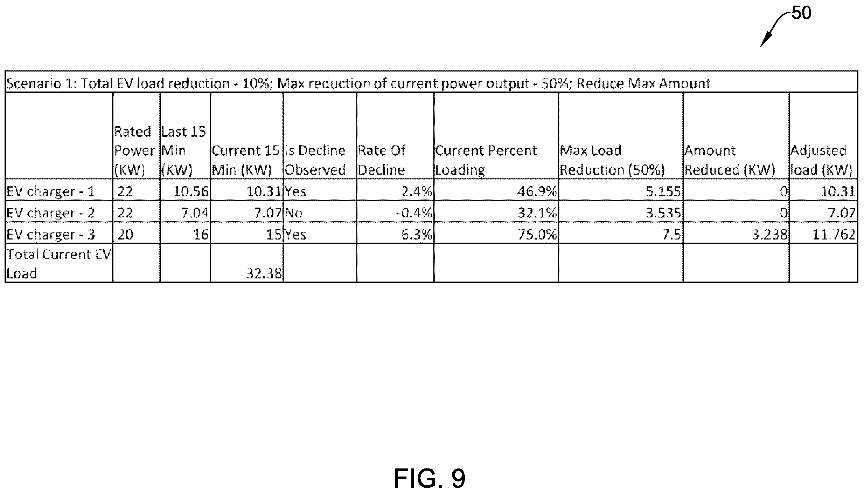

FIGS. 9-12 schematically depict charts of illustrative scenarios where one or more charging stations includes three EV charging ports 32 (e.g., EV chargers 1-3) having rated power of 22 KW, 22 KW, and 20 KW, respectively, providing energy to EVs, where the power output, $P_O$, for each EV charging port 32 has been measured at a current time (e.g., 10.31 KW, 7.07 KW, 16 KW, respectively) and at a time, $t$, prior to a current time, $i$, (10.56 KW, 7.04 KW, 16, KW). From the measured power output, Po, for each EV charging port 32, a determination as to whether the power output, Po, has declined over the time, $t$, (e.g., Yes/No) is made, a rate of decline, $D_{Rate}$, has been determined (e.g., 2.4%, -0.4%, 6.3%, respectively), and a current loading percent, $L_{Percent}$, has been determined (e.g., 46.9%, 32.1%, 75.0%, respectively). Based on the technique 400, the third EV charging port 32 has the first priority for receiving an EV charging port curtailment amount (e.g., due to having a loading percent, $L_{Percent}$, greater than 40% and the highest rate of decline, $D_{Rate}$), the first EV charging port 32 has the second priority for receiving an EV charging port curtailment amount (e.g., due to having a loading percent, $L_{Percent}$, greater than 40% and the second highest rate of decline, $D_{Rate}$), and the second EV charging port 32 has the third priority for receiving an EV charging port curtailment amount (e.g., due to having a loading percent, $L_{Percent}$, less than 40% and/or the lowest rate of decline, $D_{Rate}$). Although various techniques for applying EV charging port curtailment amounts to EV charging ports 32 are discussed with respect to FIGS. 9-12, other suitable configurations are contemplated.

In each scenario, an EV charging station curtailment amount is 10% of the total current power output, Po, (e.g., 10% of 32.38 KW) of the EV charging station 30, which is an EV charging station curtailment amount of 3.28 KW, where the EV charging station curtailment amount is allocated to individual EV charging ports 32 using a priority based EV load reduction strategy to establish an EV charging port curtailment amount (e.g., where the EV charging port curtailment amount may be based on the EV charging station curtailment, as discussed). The EV charging station curtail amount (e.g., as a percent or as a KW value) may be entered by a user and/or calculated by facility load management system 12 and/or the load management controller(s) 34 to maintain total energy usage at the facility 10 below a desired threshold.

In each scenario, a threshold for the current loading percent, $L_{Percent}$, may be set at 40%, but other suitable threshold values may be utilized. The threshold for the current loading percent, $L_{Percent}$, may be entered by a user and/or may be a default threshold in the facility load management system 12 and/or the load management controller(s) 34. As depicted in the charts, the first EV charging port 32 and the third EV charging port 32 each have a current loading percent, $L_{Percent}$, above the 40% threshold for the current loading percent, *LPercent.*

The different scenarios in the charts of FIGS. 9-12 may differ in one or more manners. For example, the scenarios may utilize different percent maximum load reductions for each EV charging port 32 and/or how the EV charging station curtailment amount may be allocated to the EV charging ports 32 as EV charging port curtailment amounts. The percent maximum load reduction for each EV charging port 32 and/or how the EV charging station curtailment amount may be allocated to different EV charging ports 32 may be entered by a user and/or may be a default value in the facility load management system 12 and/or the load management controller(s) 34. Other suitable scenarios are contemplated.

Figure 9 schematically depicts a chart 51 of an illustrative scenario in which each EV charging port 32 may have its power output, Po, reduced by up to 50% (e.g., e.g., a maximum load reduction of 5.155 KW, 3.535 KW, 7.5 KW, respectively) and the EV charging station curtailment amount may be allocated to EV charging ports 32 based solely on priority. In the scenario depicted in the chart 51, the third EV charging port 32 has the largest rate of decline, $D_{Rate}$, in power output, Po, and thus, the entire amount of the EV charging station curtailment amount, which is less than the maximum load reduction for the third EV charging port 32 (e.g., less than 7.5 KW) may be allocated to the third EV charging port 32. The adjusted loads of the EV charging ports 32 are 10.31 KW, 7.07 KW, and 11.762 KW, respectively.

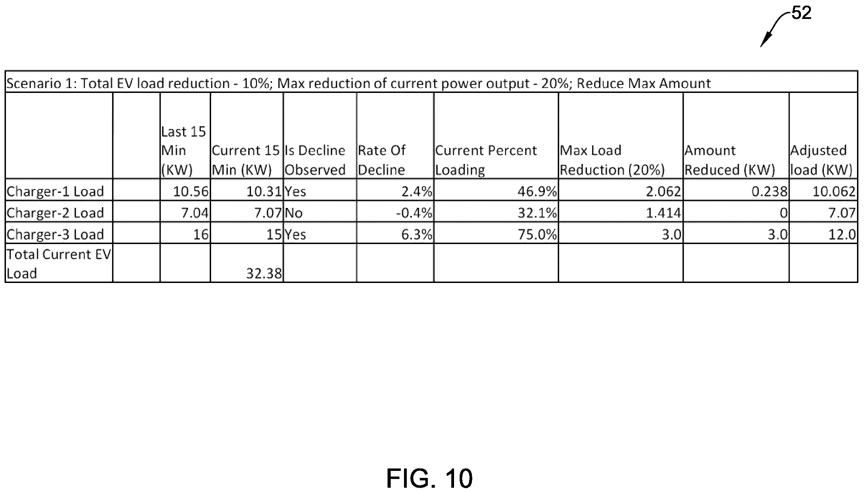

Figure 10 schematically depicts a chart 52 of an illustrative scenario in which each EV charging port 32 may have its power output, Po, reduced by up to 20% (e.g., a maximum load reduction of 2.062 KW, 1.414 KW, 3.0 KW, respectively) and the EV charging station curtailment amount may be allocated to EV charging ports 32 based solely on priority. In the scenario depicted in the chart 52, the third EV charging port 32 has the largest rate of decline, $D_{Rate}$, in power output, Po, and thus, as much of the EV charging station curtailment amount that is equal to or less than the maximum load reduction for the third EV charging port 32 may be allocated to the third EV charging port 32, which is 3.0 KW (e.g., the maximum load reduction amount). This leaves an EV charging port curtailment amount of 0.238 KW to be allocated to the first EV charging port 32, which is next on the priority list as being the other EV charging port 32 with a current percent loading, $L_{Percent}$, above 40% and a decline in power output, Po. As a result, the remaining EV charging port curtailment amount of 0.238 KW may be applied to the first EV charging port 32, such that the adjusted loads of the EV charging ports 32 are 10.062 KW, 7.07 KW, and 12.00 KW, respectively.

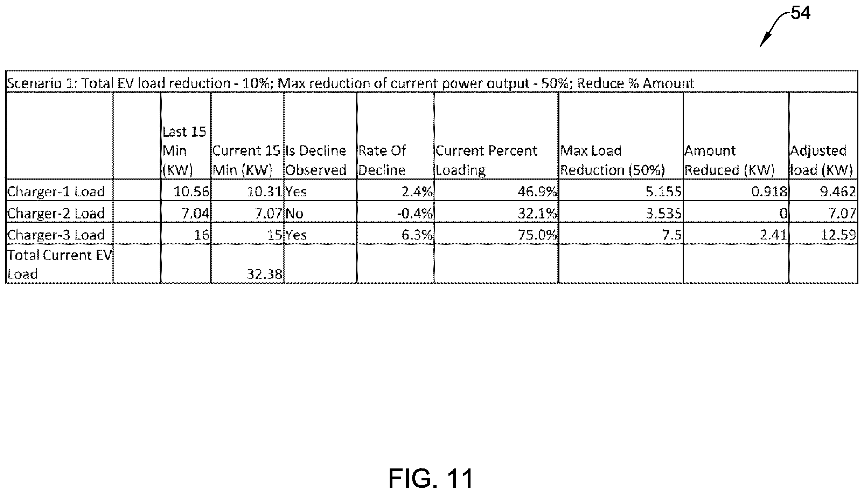

Figure 11 schematically depicts a chart 54 of an illustrative scenario in which each EV charging port 32 may have its power output, $P_O$, reduced by up to 50% (e.g., a maximum load reduction of 5.155 KW, 3.535 KW, 7.5 KW, respectively) and the EV charging station curtailment amount may be allocated to EV charging ports 32 based on priority and a percent of rate of total decline of EV charging ports 32 having a current percent loading, $L_{Percent}$, above 40% (e.g., that exceeds the threshold). In the scenario depicted in the chart 54, the first EV charging port 32 and third EV charging port 32 have current percent loadings, $L_{Percent}$, above 40%. The first EV charging port 32 has a percent of total rate of decline, $D_{Rate}$, of 27.59% and the second EV charging port 32 has a percent of total rate of decline, $D_{Rate}$, of 72.41%. Thus, 72.41% of the EV charging station curtailment amount (e.g., 3.238 KW), which is 2.41 KW, may be the EV charging port curtailment amount allocated to the third EV charging port 32 as it is below the maximum load reduction (e.g., 7.5 KW) for the third EV charging port 32 and 27.59% of the EV charging station curtail amount (e.g., 3.238 KW), which is 0.918 KW, may be the EV charging port curtailment amount allocated to the first EV charging port 32 as it is below the maximum load reduction (e.g., 5.155 KW) for the first EV charging port 32. No changes are made to the power output, $P_O$, of the second EV charging port 32. As a result, the adjusted loads of the EV charging ports 32 are 9.462 KW, 7.07 KW, 12.59 KW, respectively.

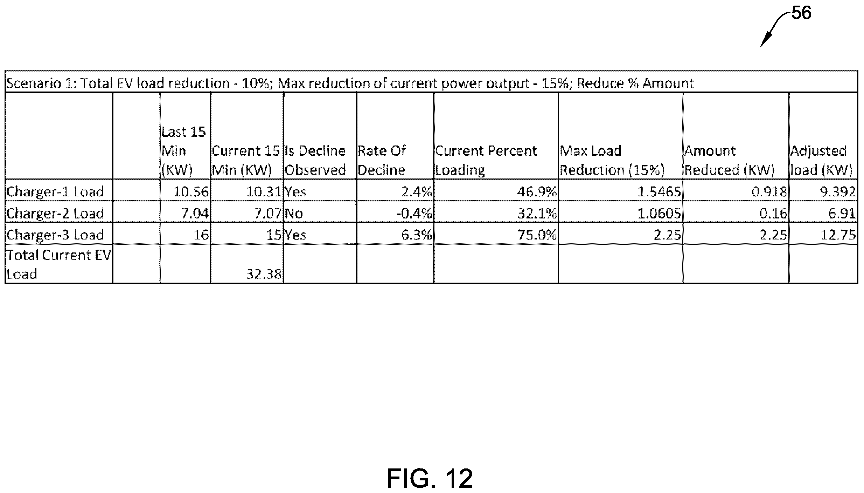

Figure 12 schematically depicts a chart 54 of an illustrative scenario in which each EV charging port 32 may have its power output, Po, reduced by up to 15% (e.g., a maximum load reduction of 1.5465 KW, 1.0605 KW, 2.25 KW, respectively) and the EV charging station curtailment amount may be allocated to EV charging ports 32 based on priority and a percent of rate of total decline of EV charging ports 32 having a current percent loading, $L_{Percent}$, above 40% (e.g., that exceeds the threshold). In the scenario depicted in the chart 56, the first EV charging port 32 and third EV charging port 32 have current percent loadings, $L_{Percent}$, above 40%. The first EV charging port 32 has a percent of total rate of decline, $D_{Rate}$, of 27.59% and the second EV charging port 32 has a percent of total rate of decline, $D_{Rate}$, of 72.41%. Thus, 72.41% of the EV charging station curtailment amount (e.g., 3.238 KW), which is 2.41 KW, up to the maximum load reduction for the third EV charging port 32, which 2.25 KW, may be the EV charging port curtailment amount allocated to the third EV charging port 32 and 27.59% of the EV charging station curtail amount (e.g., 3.238 KW), which is 0.918 KW, may be the EV charging port curtailment amount allocated to the first EV charging port 32 as it is below the maximum load reduction (e.g., 1.5465 KW) for the first EV charging port 32. This leaves 0.16 KW of the EV charging station curtailment amount to be allocated to an EV charging port 32. As the second EV charging port 32 is next on the priority list (and is the only EV charging port 32 remaining), the 0.16 KW may be allocated as an EV charging port curtailment amount for the second EV charging port 32. As a result, the adjusted loads of the EV charging ports 32 are 9.392 KW, 6.91 KW, 12.75 KW, respectively.

In some examples, however, if a higher priority EV charging port 32 has available load reduction capability below the maximum load reduction after the EV charging station curtailment amount has been allocated, any remaining portion of the EV charging station curtailment amount may be allocated to the higher EV charging port 32 with load reduction capability below the maximum load reduction. For example, the remaining 0.16 KW remaining after the EV charging station curtailment amount has been allocated to the first and third EV charging ports 32 in the example of Figure 12 may be allocated as a further EV charging port curtailment amount to the first EV charging port 32 as the first EV charging port 32 includes space for absorbing a further load reduction.

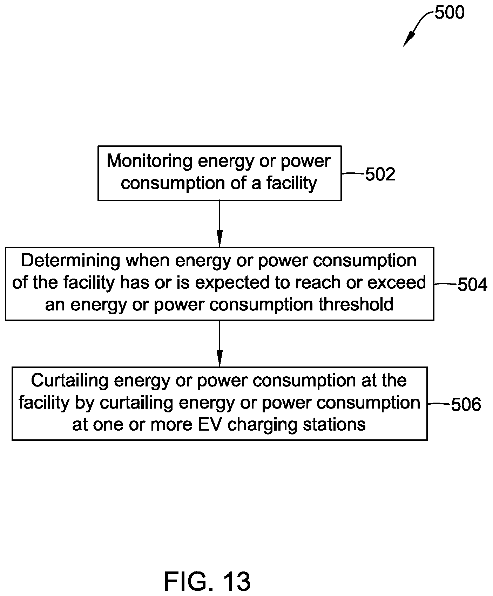

Figure 13 schematically depicts an illustrative method 500 for curtailing electrical energy or power consumption of the facility 10 to reduce or mitigate utility tariffs applied by a utility or other organization to the facility 10. The facility 10 may include a plurality of facility loads 14 (e.g., electrical loads), which may include one or more EV charging stations 30 having one or more EV charging ports 32.

The method 500 may include monitoring 502 energy or power consumption of the facility 10. The facility load management system 12, the group load management controllers 34, and/or other suitable monitoring systems may be utilized to monitor an energy consumption of the facility.

The method 500 may include determining 504 when the facility 10 has or is expected to have an energy or power consumption that triggers one or more utility tariffs of the utility. In some examples, a utility tariff may be a fee that a utility charges a customer for exceeding a predetermined amount of energy usage at a time (e.g., any instance) and/or during a time period (e.g., during a day, during a billing cycle, during peak energy usage hours, and/or at one or more other suitable time periods).

When the facility 10 has or is expected to have an energy consumption that triggers one or more utility tariffs of the utility may be determined in any suitable manner. In one example, energy usage of a facility 10 may be determined to have triggered a utility tariff when an energy usage during a billing cycle exceeds a threshold amount of energy usage. In another example, energy usage of a facility 10 may be predicted or expected to trigger one or more utility tariffs based on a learning algorithm indicating that unless an action is taken to limit energy consumption by a certain time, the utility tariff will be triggered at a future time. In some examples, the learning algorithm may monitor energy usage over time of the facility loads 14 (e.g., electrical loads) of the facility 10, including how and when the energy is consumed at and/or by the facility loads 14, and predict future energy usage in a manner that allows facility managers to curtail energy to avoid or mitigate utility tariffs, tariffs from other organizations, and/or to meet energy consumption goals.

The method 500 may include curtailing 506 energy or power consumption of each of one or more of the plurality of facility loads 14 of the facility 10. In some examples, the curtailing of energy or power consumption of one or more electrical facility loads 14 may be triggered when the facility 10 has and/or is expected to have an energy consumption that triggers one or more utility tariffs of the utility.

Curtailing energy or power consumption of the one or more facility loads 14 may include curtailing energy or power consumption of or demand at one or more EV charging stations 30 by a corresponding EV station curtailment amount. In some examples, the curtailing of energy or power consumption of or demand at the EV charging stations 30 may include curtailing energy or power consumption or demand by the EV station curtailment amount until the energy consumption of the facility 10 no longer will trigger the one or more utility tariffs of the utility.

Curtailing energy or power consumption of the facility 10 by curtailing energy consumption of one or more EV charging stations 30 may be performed in any suitable manner. For example, the energy or power consumption at each of one or more EV charging stations 30 may be curtailed by sending a control signal to the EV charging stations from a load management controller 34 or other suitable controller of the facility load management system 12 and by an EV charging station curtailment amount using the techniques described herein and/or otherwise that include, but are not limited to, limiting total energy or power consumption from one or more EV charging stations to a threshold amount or less, limiting energy or power consumption at EV charging ports 32 based on a state of charge of an EV, a dynamic load management systems in view of total energy or power consumption from EV charging stations 30 at the facility 10 and/or total energy or power consumption from facility loads 14, EV dynamic load distribution techniques, EV static load distribution techniques, priority based EV load reduction techniques, equal balancing EV load reduction techniques, and/or energy or power consumption may be utilized to curtailed in other suitable manner.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

**Claims**

1. A method of maintaining power output from a charging station group on-site at a facility below a group threshold charging rate, the charging station group having one or more electric vehicle (EV) charging stations each with one or more EV charging ports, and wherein each of the one or more EV charging ports has a corresponding maximum rated charging rate, the method comprising:

   assigning a threshold charging rate to each of the one or more EV charging ports of each of the one or more EV charging stations of the charging station group, wherein the threshold charging rate of each of the one or more EV charging ports is less than or equal to the maximum rated charging rate of the corresponding EV charging port, and a sum of the threshold charging rates the one or more EV charging ports of the one or more EV charging stations of the charging station group is maintained at or below the group threshold charging rate;

   identifying a charging port status of each of the one or more EV charging ports of each of the one or more EV charging stations of the charging station group, the charging port status including a charging port available status and a charging port charging status, wherein the charging port available status indicates that the corresponding EV charging port is available to charge an electric vehicle and the charging port charging status indicates that the corresponding EV charging port is currently charging a corresponding electric vehicle;

   increasing the threshold charging rate of one or more of the EV charging ports that are identified as having a charging port charging status to an increased threshold charging rate that is at or less than the maximum rated charging rate of the corresponding EV charging port, and decreasing the threshold charging rate of one or more of the EV charging ports that are identified as having a charging port available status to a decreased threshold charging rate, while keeping the sum of the threshold charging rates of the one or more EV charging ports of the one or more EV charging stations of the charging station group to at or less than the group threshold charging rate; and

   controlling each of the one or more EV charging ports of the charging station group in accordance with the threshold charging rate of the corresponding EV charging port.

2. The method of claim 1, comprising:
   dynamically identifying the charging port status of each of the one or more EV charging ports of each of the one or more EV charging stations of the charging station group; and
   dynamically adjusting the threshold charging rates of the one or more EV charging ports of each of the one or more EV charging stations of the charging station group based on the charging port status of each of the one or more EV charging ports of each of the one or more EV charging stations of the charging station group.

3. The method of claim 1, comprising:
   setting the threshold charging rate of each of the one or more EV charging ports of the one or more EV charging stations of the charging station group to a corresponding default threshold charging rate when all of the one or more EV charging ports of the one or more EV charging stations of the charging station group have a charging port available status.

4. The method of claim 1, wherein the increased threshold charging rate for one or more of the EV charging ports is set equal to the maximum rated charging rate of the corresponding EV charging port.

5. The method of claim 1, wherein the decreased threshold charging rate has a predetermined minimum charging rate as a lower limit.

6. The method of claim 1, wherein the group threshold charging rate corresponds to a maximum allowed power for the charging station group.

7. The method of claim 6, wherein the maximum allowed power corresponds to an electrical circuit breaker limit of an electric circuit breaker feeding the charging station group.

8. The method of claim 6, wherein the maximum allowed power is set by a Building Management System (BMS) of the facility and is dependent at least in part on a current power demand of the facility.

9. The method of claim 1, wherein one of the one or more EV charging ports has a fixed threshold charging rate that is not increased or decreased based on the charging port status of any of the other EV charging ports of the charging station group.

10. A load distribution system for managing loads at a charging station group of one or more electric vehicle (EV) charging stations of a facility below a group threshold charging rate, the load distribution system comprising:

one or more EV charging ports of the charging station group, the one or more EV charging ports each having a corresponding threshold charging rate;
a controller in communication with the charging station group, the controller is configured to:

identify which EV charging port of the one or more EV charging ports are currently providing energy to a corresponding electric vehicle and which of the one or more EV charging ports are not currently providing energy to a corresponding electric vehicle;
increase the threshold charging rate of one or more EV charging ports that are identified as currently providing energy to a corresponding electric vehicle without exceeding a corresponding maximum rated charging rate for the corresponding EV charging port, and decreasing the threshold charging rate of one or more of the EV charging ports that are identified as not currently providing energy to a corresponding electric vehicle without falling below a predetermined minimum charging rate lower limit for the corresponding EV charging port, while keeping the sum of the threshold charging rates of the one or more EV charging ports of the one or more EV charging stations of the charging station group to at or less than the group threshold charging rate; and
control each of the one or more EV charging ports of the charging station group in accordance with the threshold charging rate of the corresponding EV charging port.

11. The load distribution system of claim 10, wherein the controller is configured to:
dynamically identify which EV charging ports of the one or more EV charging ports are currently providing energy to a corresponding electric vehicle and which of the one or more EV charging ports are not currently providing energy to a corresponding electric vehicle; and
dynamically adjusting the threshold charging rates of the one or more EV charging ports of each of the one or more EV charging stations of the charging station group based on which EV charging port of the one or more EV charging ports are currently providing energy to a corresponding electric vehicle and which of the one or more EV charging ports are not currently providing energy to a corresponding electric vehicle.

12. The load distribution system of claim 10, wherein the controller is configured to: set the threshold charging rate of each of the one or more EV charging ports of the one or more EV charging stations of the charging station group to a corresponding default threshold charging rate when all of the one or more EV charging ports of the one or more EV charging stations of the charging station group are identified as not currently providing energy to a corresponding electric vehicle.

13. The load distribution system of claim 10, wherein the increased threshold charging rate for one or more of the EV charging ports is set equal to the maximum rated charging rate of the corresponding EV charging port.

14. The load distribution system of claim 10, wherein the group threshold charging rate corresponds to a maximum allowed power for the charging station group.

15. The load distribution system of claim 10, wherein one of the one or more EV charging ports has a fixed threshold charging rate that is not increased or decreased based on whether any of the other EV charging ports of the charging station group are currently providing energy to a corresponding electric vehicle or not.

**FIG. 1**

Facility — 10

Building/Facility Loads — 14

Load 1 - Lights — 16

Load 2 - HVAC — 18

Load 3 - Security — 20

Load 4 - EV Charging — 22

Load N - Other — 24

Building/Facility Load Management System — 12

FIG. 2

EP 4 578 720 A1

FIG. 3

FIG. 4

AC Charging Curve

DC Charging Curve

FIG. 5

EP 4 578 720 A1

FIG. 6

200

202 — Monitoring energy or power consumption

204 — Trigger load curtailment ? — No → 206 — No action on EV loads

Yes ↓

208 — Send curtailment instructions to EV charging ports ? — No → (No action on EV loads)

Yes ↓

210 — Determine a load curtailment strategy

212 — Curtail energy or power consumption using: equal balancing EV load reduction

214 — Curtail energy or power consumption using: Priority based EV load reduction

EP 4 578 720 A1

300

304

Take no action

302

Is $P_o > 0$ ?

No

Yes

306

Adjust a charging rate of the EV charging port with $P_o > 0$

FIG. 7

FIG. 8

| | Rated Power (KW) | Last 15 Min (KW) | Current 15 Min (KW) | Is Decline Observed | Rate Of Decline | Current Percent Loading | Max Load Reduction (50%) | Amount Reduced (KW) | Adjusted load (KW) |
|---|---|---|---|---|---|---|---|---|---|
| Scenario 1: Total EV load reduction - 10%; Max reduction of current power output - 50%; Reduce Max Amount | | | | | | | | | |
| EV charger - 1 | 22 | 10.56 | 10.31 | Yes | 2.4% | 46.9% | 5.155 | 0 | 10.31 |
| EV charger - 2 | 22 | 7.04 | 7.07 | No | -0.4% | 32.1% | 3.535 | 0 | 7.07 |
| EV charger - 3 | 20 | 16 | 15 | Yes | 6.3% | 75.0% | 7.5 | 3.238 | 11.762 |
| Total Current EV Load | | | 32.38 | | | | | | |

FIG. 9

EP 4 578 720 A1

EP 4 578 720 A1

| Scenario 1: Total EV load reduction - 10%; Max reduction of current power output - 20%; Reduce Max Amount | | | | | | | | |
|---|---|---|---|---|---|---|---|---|
| | Last 15 Min (KW) | Current 15 Min (KW) | Is Decline Observed | Rate Of Decline | Current Percent Loading | Max Load Reduction (20%) | Amount Reduced (KW) | Adjusted load (KW) |
| Charger-1 Load | 10.56 | 10.31 | Yes | 2.4% | 46.9% | 2.062 | 0.238 | 10.062 |
| Charger-2 Load | 7.04 | 7.07 | No | -0.4% | 32.1% | 1.414 | 0 | 7.07 |
| Charger-3 Load | 16 | 15 | Yes | 6.3% | 75.0% | 3.0 | 3.0 | 12.0 |
| Total Current EV Load | | 32.38 | | | | | | |

52

FIG. 10

| Scenario 1: Total EV load reduction - 10%; Max reduction of current power output - 50%; Reduce % Amount | | | | | | | | |
|---|---|---|---|---|---|---|---|---|
| | Last 15 Min (KW) | Current 15 Min (KW) | Is Decline Observed | Rate Of Decline | Current Percent Loading | Max Load Reduction (50%) | Amount Reduced (KW) | Adjusted load (KW) |
| Charger-1 Load | 10.56 | 10.31 | Yes | 2.4% | 46.9% | 5.155 | 0.918 | 9.462 |
| Charger-2 Load | 7.04 | 7.07 | No | -0.4% | 32.1% | 3.535 | 0 | 7.07 |
| Charger-3 Load | 16 | 15 | Yes | 6.3% | 75.0% | 7.5 | 2.41 | 12.59 |
| Total Current EV Load | | 32.38 | | | | | | |

FIG. 11

| Scenario 1: Total EV load reduction - 10%; Max reduction of current power output - 15%; Reduce % Amount | | | | | | | | | |
|---|---|---|---|---|---|---|---|---|---|
| | | Last 15 Min (KW) | Current 15 Min (KW) | Is Decline Observed | Rate Of Decline | Current Percent Loading | Max Load Reduction (15%) | Amount Reduced (KW) | Adjusted load (KW) |
| Charger-1 Load | | 10.56 | 10.31 | Yes | 2.4% | 46.9% | 1.5465 | 0.918 | 9.392 |
| Charger-2 Load | | 7.04 | 7.07 | No | -0.4% | 32.1% | 1.0605 | 0.16 | 6.91 |
| Charger-3 Load | | 16 | 15 | Yes | 6.3% | 75.0% | 2.25 | 2.25 | 12.75 |
| Total Current EV Load | | | 32.38 | | | | | | |

FIG. 12

500

```
┌─────────────────────────────┐
│   Monitoring energy or power │ ─502
│   consumption of a facility  │
└─────────────────────────────┘
              │
              ▼
┌─────────────────────────────────────┐
│ Determining when energy or power     │
│ consumption of the facility has or    │ ─504
│ is expected to reach or exceed        │
│ an energy or power consumption        │
│ threshold                             │
└─────────────────────────────────────┘
              │
              ▼
┌─────────────────────────────────────┐
│ Curtailing energy or power consumption│
│ at the facility by curtailing energy  │ ─506
│ or power consumption at one or more   │
│ EV charging stations                  │
└─────────────────────────────────────┘
```

FIG. 13

## EUROPEAN SEARCH REPORT

**Application Number**

EP 24 22 3263

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/225565 A1 (EGER KOLJA [DE] ET AL) 14 August 2014 (2014-08-14) * paragraph [0059] - paragraph [0245]; figures 1-6 * | 1-15 | INV. B60L53/62 B60L53/63 B60L53/66 B60L53/67 |
| A | US 2021/086647 A1 (KIESSLING THOMAS [US] ET AL) 25 March 2021 (2021-03-25) * paragraph [0034] - paragraph [0096]; figures 1-7 * | 1-15 | B60L53/68 |

**TECHNICAL FIELDS SEARCHED (IPC)**

B60L

The present search report has been drawn up for all claims

| Place of search | Date of completion of the search | Examiner |
|---|---|---|
| The Hague | 14 May 2025 | Altuntas, Mehmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 22 3263

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | | Publication date |
|---|---|---|---|---|
| US 2014225565 A1 | 14-08-2014 | CN | 103874600 A | 18-06-2014 |
| | | EP | 2726317 A1 | 07-05-2014 |
| | | ES | 2869157 T3 | 25-10-2021 |
| | | US | 2014225565 A1 | 14-08-2014 |
| | | WO | 2013026464 A1 | 28-02-2013 |
| US 2021086647 A1 | 25-03-2021 | EP | 4031405 A1 | 27-07-2022 |
| | | US | 2021086647 A1 | 25-03-2021 |
| | | US | 2024116388 A1 | 11-04-2024 |
| | | WO | 2021055843 A1 | 25-03-2021 |

EPO FORM P0459

For more details about this annex : see Official Journal of the European Patent Office, No. 12/82